# EUROPEAN PATENT APPLICATION

(11) **EP 4 848 468 A1**
(43) Date of publication of application: **02.12.2026**
(21) Application number: 25762419.7
(22) Date of filing: 28.02.2025
(51) Int. Cl.: H01M 50/593, H01M 50/107

(54) **BATTERY CELL INSULATOR INSERTING APPARATUS AND METHOD**

(30) Priority: 28.02.2024 KR 20240029246
(71) Applicant: LG Energy Solution, Ltd., Seoul 07335 (KR)
(72) Inventor: PARK, Juho, Daejeon 34122 (KR); LEE, Jinhyeong, Daejeon 34122 (KR); SUNG, Backmin, Daejeon 34122 (KR)
(74) Representative: Goddar, Heinz J.
(86) International application number: PCT/KR2025/002824
(87) International publication number: WO 2025/183502

(57) **Abstract**

The present invention provides an apparatus for inserting insulating member of battery cell, including: a carrier 100 having an accommodating space open toward a first side where a battery cell 50 having an interior space open toward the first side is accommodated; and an arm 200 disposed on the first side of the carrier 100 and having a first end surface S1 on a second side thereof opposite to the first side, an insulating member 70 being held on the first end surface S1, the arm 200 relatively moving toward the second side to insert the insulating member 70 into the battery cell 50. The insulating member 70 may include a through-hole 72 formed through the insulating member 70, the through-hole 72 extending toward the first side and the second side. The arm 200 may include an exhaust hole 210 formed therethrough. The exhaust hole 210 may have a first end formed in the first end surface S1 communicating with the through-hole 72 toward the first side and the second side, and a second end formed in an outer surface of the arm 200 and formed on the first side of the first end surface S1.

## Description

### [TECHNICAL FIELD]

This application claims the benefit of priority based on Korean Patent Application No. 10-2024-0029246 filed on February 28, 2024, entire content disclosed in the document of the patent applications is comprised as a part of this specification.

The present invention relates to an apparatus and a method for inserting an insulating member of a battery cell, wherein the insulating member does not move or rotate and is not detached from an arm when inserted into the battery cell.

### [BACKGROUND ART]

A cylindrical battery cell is easy to manufacture and has the advantages of high energy density per weight, and is used as an energy source for various devices ranging from portable computers to battery-powered vehicles.

A cylindrical battery cell is manufactured by accommodating a jelly-roll type electrode assembly in a cylindrical case, inserting an upper insulating member and a lower insulating member at both ends of the electrode assembly, injecting an electrolyte, and combining a top cap on the top of the cylindrical case.

In the conventional apparatus for inserting insulating member, in relation to the insertion of the insulating member, the arm capable of moving up and down moves downward with the insulating member held by suction on the lower surface thereof to insert the insulating member into the battery cell fixed under the arm. Here, a vortex is generated around the insulating member such that the insulating member may move or rotate or be detached from the arm. Accordingly, a the insulating member is caught on an upper end of the carrier fixing the battery cell or the battery cell, or the battery cell is damaged by the rotated insulating member, which increases the defect rate of the battery cell and requires the manufacturing process to be halted.

Therefore, a method for preventing the movement of the insulating member, rotation of the insulating member and detachment of the insulating member from the arm during the insertion of the insulating member is necessary.

Pertinent prior literature is Korean Patent No. 10-0158396.

### [DISCLOSURE]

### [TECHNICAL PROBLEM]

In order to solve above-described problems, it is an object of the present invention to provide an apparatus and method for inserting an insulating member of a battery cell, wherein even when the insulating member is inserted into the battery cell while being held on an arm, an insulating member may not move and rotate and may not be detached from the arm during insertion.

It is an object of the present invention to provide an apparatus and method for inserting an insulating member of a battery cell, where a vortex may not be generated or may be reduced around the insulating member.

It is an object of the present invention to provide an apparatus and method for inserting an insulating member of a battery cell, wherein even when an exhaust hole is formed in an arm, an insulating member may be stably held on the arm and the held state may be stably maintained.

It is an object of the present invention to provide an apparatus and method for inserting an insulating member of a battery cell, wherein air inside a carrier or a battery cell may be easily discharged to the outside through an exhaust hole.

It is an object of the present invention to provide an apparatus and method for inserting an insulating member of a battery cell, wherein an exhaust hole may be easily embodied in an arm at low cost.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides an apparatus for inserting insulating member of battery cell 10, the apparatus including: a carrier 100; and an arm 200.

The carrier 100 may have an accommodating space open toward a first side.

The battery cell 50 having an interior space open toward the first side may be accommodated in the accommodating space.

The arm 200 may be disposed on the first side of the carrier 100.

The arm 200 may have a first end surface S1 on a second side thereof opposite to the first side, wherein the insulating member 70 is held on the first end surface S1.

The arm 200 may relatively move toward the second side to insert the insulating member 70 into the battery cell 50.

The insulating member 70 may include a through-hole 72 formed through the insulating member 70, wherein the through-hole 72 extends toward the first side and the second side.

The arm 200 may include an exhaust hole 210 formed therethrough.

The exhaust hole 210 may have a first end formed in the first end surface S1.

The first end of the exhaust hole 210 may communicate with the through-hole 72 toward the first side and the second side.

The exhaust hole 210 may have a second end formed in an outer surface of the arm 200.

The second end of the exhaust hole 210 may be formed on the first side of the first end surface S1.

In one embodiment, the exhaust hole 210 and the through-hole 72 face each other.

In one embodiment, the arm 200 may include: one or more suction holes 220; and one or more connecting holes 230.

Each of the one or more suction holes 220 may have a first end formed in the first end surface S1.

Each of the one or more suction holes 220 may extend at least partially toward the first side.

Each of the one or more suction holes 220 may form an air flow path for holding the insulating member 70.

The one or more connecting holes 230 may communicate with second ends of the one or more suction holes 220.

The one or more connecting holes 230 may be connected to a decompression source.

The decompression source may provide a negative pressure to the one or more suction holes 220 and the one or more connecting holes 230.

The exhaust hole 210 may be formed spaced apart from the one or more suction holes 220 and the one or more connecting holes 230.

In one embodiment, the arm 200 may have a side surface S2 extending toward the first side from an edge of the first end surface S1.

The exhaust hole 210 may include a main hole 212 and one or more extension holes 214.

The main hole 212 may be recessed from an end of the arm 200 on the second side toward the first side and closed at the first side.

Each of the one or more extension holes 214 may have a first end communicating with the main hole 212.

Each of the one or more extension holes 214 may at least partially extend in a direction intersecting with an extending direction of the arm 200.

Each of the one or more extension holes 214 may have a second end formed in the side surface S2.

In one embodiment, the exhaust hole 210 may include the main hole 212 and a plurality of the extension holes 214.

The main hole 212 may have a cross-sectional area larger than that of each of the plurality of extension holes 214.

In one embodiment, the exhaust hole 210 may include the main hole 212 and a plurality of the extension holes 214.

The plurality of extension holes 214 may be radially formed around the main hole 212.

In one embodiment, the plurality of extension holes 214 may be formed at equal angular intervals around the main hole 212 when projected on a virtual plane perpendicular to an extending direction of the arm 200.

In one embodiment, the exhaust hole 210 may include the main hole 212 and a plurality of the extension holes 214.

The arm 200 may include: a plurality of suction holes 220; and one or more connecting holes 230.

Each of the plurality of suction holes 220 may have a first end formed in the first end surface S1.

Each of the plurality of suction holes 220 may extend at least partially toward the first side.

Each of the plurality of suction holes 220 may form an air flow path for holding the insulating member 70.

The one or more connecting holes 230 may communicate with second ends of the plurality of suction holes 220.

The one or more connecting holes 230 may be connected to a decompression source.

The decompression source may provide a negative pressure to the plurality of suction holes 220 and the one or more connecting holes 230.

The main hole 212 and the plurality of extension holes 214 may be formed spaced apart from the plurality of suction holes 220 and the one or more connecting holes 230.

In one embodiment, each of the plurality of suction holes 220 may include a first hole 222.

The first hole 222 may have a first end formed in the first end surface S1.

The first hole 222 may extend toward the first side.

A plurality of the first holes 222 may be formed spaced apart from each other in a circumferential direction around the main hole 212.

The plurality of extension holes 214 may be radially formed around the main hole 212. Each of the plurality of extension holes 214 may be formed through a portion between a pair of adjacent first holes 222 in the circumferential direction.

In one embodiment, the plurality of extension holes 214 and the plurality of first holes 222 may be alternately formed in the circumferential direction around the main hole 212 when projected on a virtual plane perpendicular to an extending direction of the arm 200.

The plurality of extension holes 214 and the plurality of first holes 222 may be alternately formed in the circumferential direction around the main hole 212 at equal angular intervals when projected on the virtual plane.

In one embodiment, the arm 200 may include a body 202 and a suction tip 204.

The suction tip 204 may be disposed at the second side of the body 202.

The first end surface S1 may be an end surface of the suction tip 204 on the second side.

The exhaust hole 210 may be formed through the suction tip 204.

The exhaust hole 210 may have a first end formed in the first end surface S1.

The exhaust hole 210 may have a second end formed in an outer surface of the suction tip 204.

In order to solve above-described problems, the present invention provides a method S500 of inserting an insulating member of a battery cell, the method including: an insertion process S510.

In the insertion process S510, the arm 200 may relatively move toward the second side while the insulating member 70 is held on the first end surface S1 to insert the insulating member 70 into the battery cell 50.

In addition, when the insulating member 70 is inserted into the battery cell 50, air inside a carrier 100 or the battery cell 50 may be discharged to outside through the through-hole 72 of the insulating member 70 and the exhaust hole 210 of the arm 200.

### [ADVANTAGEOUS EFFECTS]

According to embodiments of the present invention, an apparatus for inserting insulating member of battery cell may include: a carrier 100 having an accommodating space open toward a first side where a battery cell 50 having an interior space open toward the first side may be accommodated; and an arm 200 disposed on the first side of the carrier 100 and having a first end surface S1 on a second side thereof opposite to the first side, an insulating member 70 being held on the first end surface S1, the arm 200 relatively moving toward the second side to insert the insulating member 70 into the battery cell 50. The insulating member 70 may include a through-hole 72 formed through the insulating member 70, the through-hole 72 extending toward the first side and the second side. The arm 200 may include an exhaust hole 210 formed therethrough. The exhaust hole 210 may have a first end formed in the first end surface S1 and communicating with the through-hole 72 toward the first side and the second side; and a second end formed in an outer surface of the arm 200 and formed on the first side of the first end surface S1.

Accordingly, when the arm 200 moves relatively toward the second side and insert the insulating member 70 into the battery cell 50, the air inside the carrier 100 or the battery cell 50 may be easily discharged to the outside through the through-hole 72 of the insulating member 70 and the exhaust hole 210 of the arm 200 such that vortex may not be generated or may be reduced around the insulating member 70. As a result, even when the insulating member 70 is held on the arm 200 and inserted into the battery cell 50, the insulating member 70 may not move or rotate during insertion and may not be detached from the arm 200. Accordingly, the defect rate of the battery cell 50 may be reduced and the productivity and quality may be improved.

According to embodiments of the present invention, the exhaust hole 210 and the through-hole 72 face each other.

Accordingly, the air inside the carrier 100 or battery cell 50 may be easily discharged to the outside through the through-hole 72 of the insulating member 70 and the exhaust hole 210 of the arm 200. Therefore, vortex may not be generated or may be reduced around the insulating member 70.

According to embodiments of the present invention, the arm 200 may include: one or more suction holes 220, each of the one or more suction holes 220 having a first end formed in the first end surface S1, extending at least partially toward the first side, and forming an air flow path for holding the insulating member 70; and one or more connecting holes 230 communicating with second ends of the one or more suction holes 220, and connected to a decompression source. The decompression source may provide a negative pressure to the one or more suction holes 220 and the one or more connecting holes 230. The exhaust hole 210 may be formed spaced apart from the one or more suction holes 220 and the one or more connecting holes 230.

Accordingly, since the suction hole 220 and the connecting hole 230 are separated from the exhaust hole 210, the insulating member 70 may be stably held on the arm 200 and the held state may be stably maintained even when the exhaust hole 210 is formed in the arm 200.

According to embodiments of the present invention, the arm 200 may have a side surface S2 extending toward the first side from an edge of the first end surface S1. The exhaust hole 210 may include a main hole 212 and one or more extension holes 214. The main hole 212 may be recessed from an end of the arm 200 on the second side toward the first side and closed at the first side. Each of the one or more extension holes 214 may at least partially extend in a direction intersecting with an extending direction of the arm 200 and may have a first end communicating with the main hole 212 and a second end formed in the side surface S2.

Accordingly, the length of the path of air passing through the exhaust hole 210 may be reduced. For example, the length of the path of air passing through the exhaust hole 210 may be shorter than the length of the arm 200. Therefore, the air inside the carrier 100 or battery cell 50 may easily discharged to the outside through the exhaust hole 210. As a result, a vortex may not be generated or may be reduced around the insulating member 70.

According to embodiments of the present invention, the exhaust hole 210 may include a main hole 212 and a plurality of the extension holes 214. The main hole 212 may have a cross-sectional area larger than that of each of the plurality of extension holes 214.

Accordingly, the air inside the carrier 100 or battery cell 50 may be easily discharged to the outside through the exhaust hole 210. Therefore, vortex may not be generated or may be reduced around the insulating member 70.

According to embodiments of the present invention, the exhaust hole 210 may include the main hole 212 and a plurality of the extension holes 214. The plurality of extension holes 214 may be radially formed around the main hole 212.

Accordingly, the air inside the carrier 100 or battery cell 50 may be easily discharged to the outside through the exhaust hole 210. Therefore, vortex may not be generated or may be reduced around the insulating member 70.

According to embodiments of the present invention, the plurality of extension holes 214 may be formed at equal angular intervals around the main hole 212 when projected on a virtual plane perpendicular to an extending direction of the arm 200.

Accordingly, the air inside the carrier 100 or battery cell 50 may be easily discharged to the outside through the exhaust hole 210. Therefore, vortex may not be generated or may be reduced around the insulating member 70.

According to embodiments of the present invention, the exhaust hole 210 may include the main hole 212 and a plurality of the extension holes 214. The arm 200 may include: a plurality of suction holes 220, each of the plurality of suction holes 220 having a first end formed in the first end surface S1, extending at least partially toward the first side, and forming an air flow path for holding the insulating member 70; and one or more connecting holes 230 communicating with second ends of the plurality of suction holes 220, and connected to a decompression source. The decompression source may provide a negative pressure to the plurality of suction holes 220 and the one or more connecting holes 230. The main hole 212 and the plurality of extension holes 214 may be formed spaced apart from the one or more suction holes 220 and the one or more connecting holes 230.

Accordingly, even when the exhaust hole 210 is formed in the arm 200, the insulating member 70 may be stably held on the arm 200 and the held state may be stably maintained.

In addition, since the exhaust hole 210 includes a plurality of extension holes 214, the air inside the carrier 100 or battery cell 50 may be easily discharged to the outside through the exhaust hole 210. Therefore, vortex may not be generated or may be reduced around the insulating member 70.

In addition, since a plurality of suction holes 220 are provided, the insulating member 70 may be stably held on the arm 200 and the held state may be stably maintained.

According to embodiments of the present invention, each of the plurality of suction holes 220 may include a first hole 222 extending toward the first side and having a first end formed in the first end surface S1. A plurality of the first holes 222 may be formed spaced apart from each other in a circumferential direction around the main hole 212. The plurality of extension holes 214 may be radially formed around the main hole 212. Each of the plurality of extension holes 214 may be formed through a portion between a pair of adjacent first holes 222 in the circumferential direction.

Accordingly, the plurality of suction holes 220 may be formed separated from the plurality of extension holes 214. As a result, the insulating member 70 may be stably held on the arm 200 and the held state may be stably maintained, even when the exhaust hole 210 is provided in the arm 200.

According to embodiments of the present invention, the plurality of extension holes 214 and the plurality of first holes 222 may be alternately formed in the circumferential direction around the main hole 212 at equal angular intervals when projected on a virtual plane perpendicular to an extending direction of the arm 200.

Accordingly, the air inside the carrier 100 or battery cell 50 may be easily discharged to the outside through the exhaust hole 210, and at the same time, the insulating member 70 may be stably held on the arm 200 and the held state may be stably maintained.

According to embodiments of the present invention, the arm 200 may include a body 202 and a suction tip 204 disposed at the second side of the body 202. The first end surface S1 may be an end surface of the suction tip 204 on the second side. The exhaust hole 210 may be formed through the suction tip 204, have a first end formed in the first end surface S1, and have a second end formed in an outer surface of the suction tip 204.

Accordingly, the exhaust hole 210 may be provided by replacing only the suction tip 204. That is, conventional parts other than the suction tip 204 may be used as is. Accordingly, the exhaust hole 210 may be easily embodied in the arm 200 at low cost.

In addition, since the exhaust hole 210 is formed in the suction tip 204 at the tip of the arm 200, the length of the exhaust hole 210 may be reduced. Therefore, the air inside the carrier 100 or battery cell 50 may be easily discharged to the outside through the exhaust hole 210.

According to embodiments of the present invention, a method S500 of inserting an insulating member of a battery cell may include: an insertion process S510 in which the arm 200 relatively moves toward the second side while the insulating member 70 is held on the first end surface S1 to insert the insulating member 70 into the battery cell 50. In the inserting process S510, when the insulating member 70 is inserted into the battery cell 50, air inside a carrier 100 or the battery cell 50 may be discharged to outside through the through-hole 72 of the insulating member 70 and the exhaust hole 210 of the arm 200.

Accordingly, when the arm 200 moves relatively toward the second side and insert the insulating member 70 into the battery cell 50, the air inside the carrier 100 or the battery cell 50 may be easily discharged to the outside through the through-hole 72 of the insulating member 70 and the exhaust hole 210 of the arm 200 such that vortex may not be generated or may be reduced around the insulating member 70. As a result, even when the insulating member 70 is held on the arm 200 and inserted into the battery cell 50, the insulating member 70 may not move or rotate during insertion and may not be detached from the arm 200. Accordingly, the defect rate of the battery cell 50 may be reduced and the productivity and quality may be improved.

In addition to the advantageous effects described above, specific effects of the present invention will be described further while describing specific details of the present invention.

### [BRIEF DESCRIPTION OF DRAWINGS]

FIGS. 1 and 2 are cross-sectional views schematically illustrating an apparatus for inserting an insulating member of a battery cell according to an embodiment of the present invention.
FIG. 3 is a perspective view schematically illustrating a suction tip of an arm of the apparatus for inserting insulating member of battery cell of FIGS. 1 and 2.
FIG. 4 and FIG. 5 are diagrams illustrating the suction tip of FIG. 3 with an insulating member adsorbed on cross-sections thereof taken along the lines 4-4' and 5-5'.
FIG. 6 is a plane perspective view of the suction tip of FIGS. 3 to 5.
FIG. 7 is a flow chart of a method for inserting an insulating member of a battery cell according to an embodiment of the present invention.

### [DESCRIPTION OF REFERENCE NUMERALS]

10: apparatus for inserting insulating member of battery cell
50: battery cell
52: electrode tab
70: insulating member
100: carrier
200: arm
202: body
204: suction tip
210: exhaust hole
212: main hole
214: extension hole
220: suction hole
222: first hole
224: second hole
230: connecting hole
S1: first end surface
S2: side surface

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein comprise expressions in plural form unless the context explicitly dictates otherwise. Terms such as "consists of" or "comprises" used herein should not be construed as necessarily comprising all of the elements or steps described in the specification, and should be construed as not comprising some of the elements or steps, or comprising additional elements or steps.

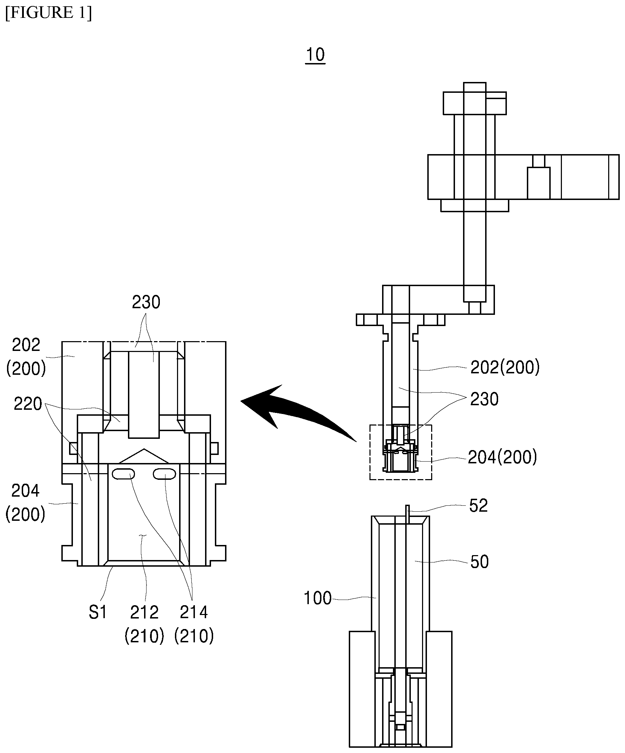

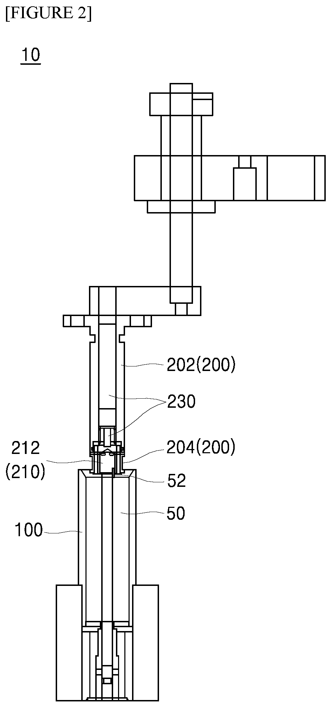

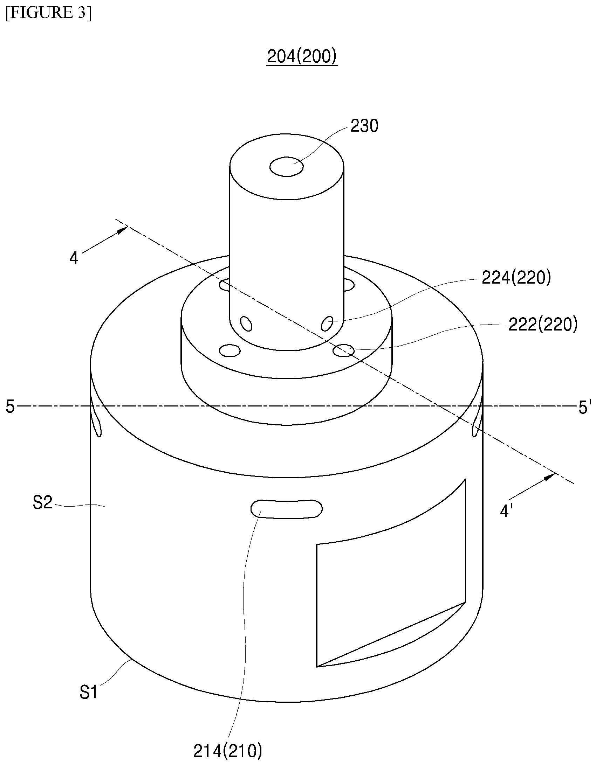

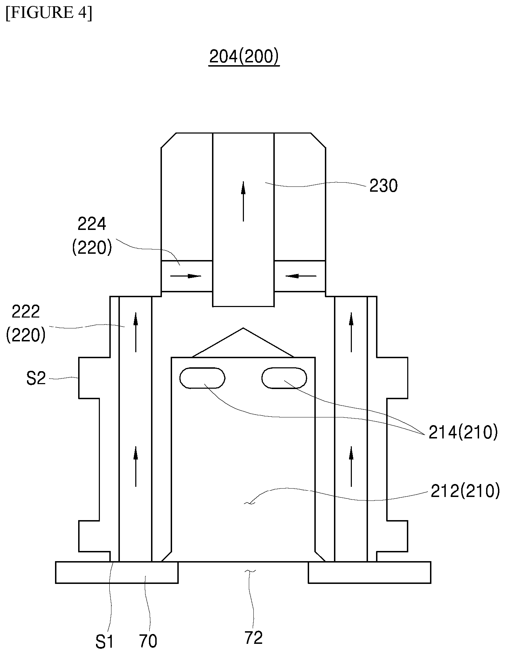

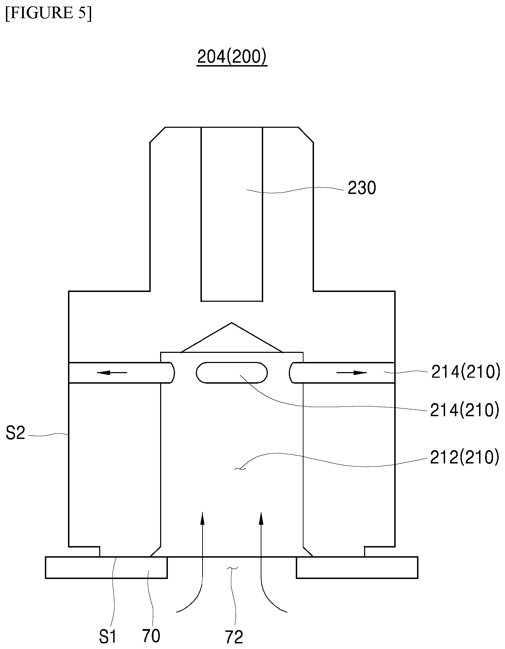

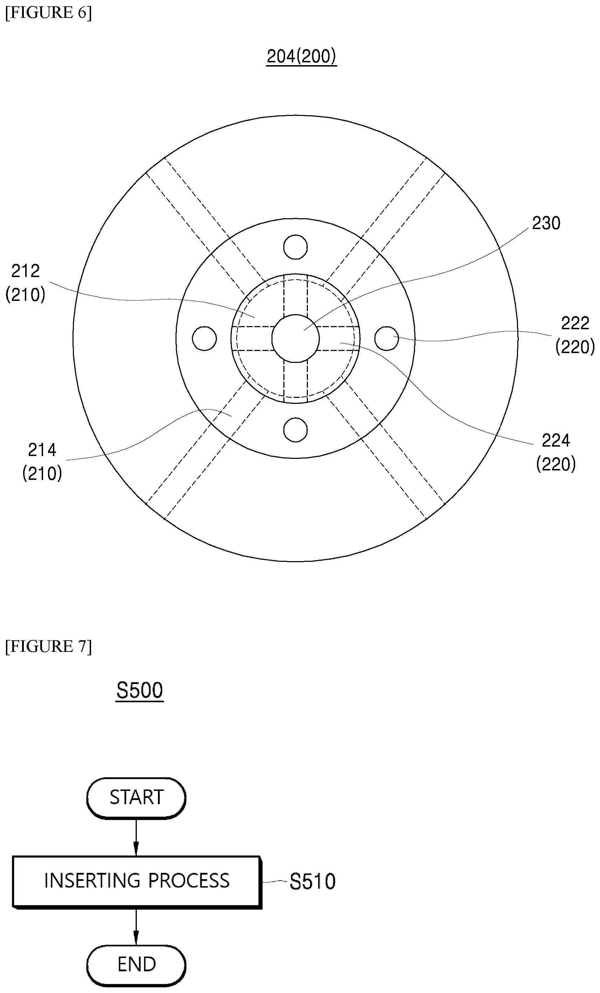

FIGS. 1 and 2 are cross-sectional views schematically illustrating an apparatus for inserting an insulating member of a battery cell according to an embodiment of the present invention. FIG. 3 is a perspective view schematically illustrating a suction tip of an arm of the apparatus for inserting insulating member of battery cell of FIGS. 1 and 2. FIG. 4 and FIG. 5 are diagrams illustrating the suction tip of FIG. 3 with an insulating member adsorbed on cross-sections thereof taken along the lines 4-4' and 5-5'. FIG. 6 is a plane perspective view of the suction tip of FIGS. 3 to 5. FIG. 7 is a flow chart of a method for inserting an insulating member of a battery cell according to an embodiment of the present invention.

### [APPARATUS FOR INSERTING INSULATING MEMBER OF BATTERY CELL]

Referring to FIGS. 1 and 2, the apparatus for inserting an insulating member of a battery cell 10 may include: a carrier 100; an arm 200; and a decompression source (not shown).

The carrier 100 may have an accommodating space open toward a first side (e.g. upper side). The battery cell 50 having an interior space open toward the first side may be accommodated in the accommodating space.

Here, the battery cell 50 may include an electrode tab 52 protruding upward the first side.

The arm 200 may be disposed on the first side of the carrier 100. The arm 200 may have a first end surface S1 on a second side (e.g. lower side) thereof opposite to the first side. An insulating member 70 (FIGS. 4 and 5) may be held on the first end surface S1. The arm 200 may relatively move toward the second side to insert the insulating member 70 into the battery cell 50.

Here, the insulating member 70 may have a plate shape. The insulating member 70 may have a ring shape. The insulating member 70 may include a through-hole 72 formed through the insulating member 70, the through-hole 72 extending toward the first side and the second side (FIGS. 4 and 5).

The arm 200 may have a side surface S2 (FIG. 3 to FIG. 5). The side surface S2 may extend toward the first side from the edge of the first end surface S1.

The decompression source may be connected to arm 200. The decompression source may provide a negative pressure to the arm 200 such that the insulating member 70 is held on the first end surface S1 (FIG. 4).

### [ARM]

The arm 200 may include a body 202 and a suction tip 204 disposed at the second side of the body 202.

The body 202 may extend toward the second side (e.g., lower side). At least a portion of the one or more connecting hole 230 described below may be formed in body 202.

The suction tip 204 may be disposed at the second side of the body 202. The above-described first end surface S1 may be an end surface of the suction tip 204 on the second side.

Referring further to FIGS. 3 to 6, the arm 200 may include an exhaust hole 210. Here, the arm 200 may correspond to the suction tip 204 of the arm 200. The same applies hereinafter. The arm 200 may include one or more or a plurality of suction holes 220. The arm 200 may include one or more connecting holes 230.

The exhaust hole 210 may be formed through the arm 200.

The exhaust hole 210 may have a first end formed in the first end surface S1. The first end of the exhaust hole 210 may communicate with the through-hole 72 toward the first side and the second side. The exhaust hole 210 may have a second end formed in an outer surface of the arm 200 and formed on the first side of the first end surface S1.

Accordingly, when the arm 200 moves relatively toward the second side and insert the insulating member 70 into the battery cell 50, the air inside the carrier 100 or the battery cell 50 may be easily discharged to the outside through the through-hole 72 of the insulating member 70 and the exhaust hole 210 of the arm 200 such that vortex may not be generated or may be reduced around the insulating member 70. As a result, even when the insulating member 70 is held on the arm 200 and inserted into the battery cell 50, the insulating member 70 may not move or rotate during insertion and may not be detached from the arm 200. Accordingly, the defect rate of the battery cell 50 may be reduced and the productivity and quality may be improved.

In case the insulating member 70 moves or rotates or is detached from the arm 200 during the insertion of the insulating member 70, the insulating member 70 may be caught on the upper end of the carrier 100 or the battery cell 50, or the electrode tab 52 of the battery cell 50 may be damaged. Accordingly, the defect rate of the battery cell 50 may increase and the manufacturing process should be halted.

The exhaust hole 210 and the through-hole 72 face each other.

Accordingly, the air inside the carrier 100 or battery cell 50 may be easily discharged to the outside through the through-hole 72 of the insulating member 70 and the exhaust hole 210 of the arm 200. Therefore, vortex may not be generated or may be reduced around the insulating member 70.

The second end of the exhaust hole 210 may not be inserted into the carrier 100 or the battery cell 50.

The exhaust hole 210 may be formed spaced apart from the one or more suction holes 220 and the one or more connecting holes 230 described later.

Accordingly, since the suction hole 220 and the connecting hole 230 are separated from the exhaust hole 210, the insulating member 70 may be stably held on the arm 200 and the held state may be stably maintained even when the exhaust hole 210 is formed in the arm 200.

The exhaust hole 210 may be formed through the suction tip 204. The exhaust hole 210 may have a first end formed in the first end surface S1. The exhaust hole 210 may have a second end formed in an outer surface of the suction tip 204 (FIGS. 3 to 6).

Accordingly, the exhaust hole 210 may be provided by replacing only the suction tip 204. That is, conventional parts other than the suction tip 204 may be used as is. Accordingly, the exhaust hole 210 may be easily embodied in the arm 200 at low cost.

In addition, since the exhaust hole 210 is formed in the suction tip 204 at the tip of the arm 200, the length of the exhaust hole 210 may be reduced. Therefore, the air inside the carrier 100 or battery cell 50 may be easily discharged to the outside through the exhaust hole 210.

The exhaust hole 210 may include a main hole 212 and one or more extension holes 214. The exhaust hole 210 may include a plurality of extension holes 214.

The main hole 212 may be recessed from an end of the arm 200 on the second side toward the first side. The main hole 212 may be closed at the first side. That is, the main hole 212 may have a first end formed in the first end surface S1 and a closed second end. An electrode tab 52 may be inserted into the main hole 212 (FIG. 2).

Each extension hole 214 may have a first end communicate with the main hole 212. Each extension hole 214 may at least partially extend in a direction intersecting an extending direction of the arm 200. Each extension hole 214 may have a second end formed in the side surface S2 of the arm 200.

Accordingly, the length of the path of air passing through the exhaust hole 210 may be reduced. For example, the length of the path of air passing through the exhaust hole 210 may be shorter than the length of the arm 200. Therefore, the air inside the carrier 100 or battery cell 50 may easily discharged to the outside through the exhaust hole 210. As a result, a vortex may not be generated or may be reduced around the insulating member 70.

The main hole 212 may have a cross-sectional area larger than that of each of the plurality of extension holes 214.

Accordingly, the air inside the carrier 100 or battery cell 50 may be easily discharged to the outside through the exhaust hole 210. Therefore, vortex may not be generated or may be reduced around the insulating member 70.

The plurality of extension holes 214 may be radially formed around the main hole 212.

Accordingly, the air inside the carrier 100 or battery cell 50 may be easily discharged to the outside through the exhaust hole 210. Therefore, vortex may not be generated or may be reduced around the insulating member 70.

The plurality of extension holes 214 may be formed at equal angular intervals around the main hole 212 when projected on a virtual plane perpendicular to an extending direction of the arm 200 (FIG. 6).

Accordingly, the air inside the carrier 100 or battery cell 50 may be easily discharged to the outside through the exhaust hole 210. Therefore, vortex may not be generated or may be reduced around the insulating member 70.

The main hole 212 and the plurality of extension holes 214 may be formed spaced apart from the one or more suction holes 220 and the one or more connecting holes 230 described below.

Accordingly, even when the exhaust hole 210 is formed in the arm 200, the insulating member 70 may be stably held on the arm 200 and the held state may be stably maintained.

In addition, since the exhaust hole 210 includes a plurality of extension holes 214, the air inside the carrier 100 or battery cell 50 may be easily discharged to the outside through the exhaust hole 210. Therefore, vortex may not be generated or may be reduced around the insulating member 70.

In addition, since a plurality of suction holes 220 are provided, the insulating member 70 may be stably held on the arm 200 and the held state may be stably maintained.

As described above, the plurality of extension holes 214 may be formed radially around the main hole 212. Here, each of the plurality of extension holes 214 may be formed through a portion between a pair of adjacent first holes 222 surrounding the main hole 212 in the circumferential direction, which will be described later.

Accordingly, the plurality of suction holes 220 may be formed separated from the plurality of extension holes 214. As a result, the insulating member 70 may be stably held on the arm 200 and the held state may be stably maintained, even when the exhaust hole 210 is provided in the arm 200.

The plurality of extension holes 214 and the plurality of first holes 222 may be alternately formed in the circumferential direction around the main hole 212 at equal angular intervals when projected on a virtual plane perpendicular to an extending direction of the arm 200.

Accordingly, the air inside the carrier 100 or battery cell 50 may be easily discharged to the outside through the exhaust hole 210, and at the same time, the insulating member 70 may be stably held on the arm 200 and the held state may be stably maintained.

Each of the one or more or the plurality of suction holes 220 may have a first end formed in the first end surface S1 of the arm 200. Each of the one or more or the plurality of suction holes 220 may extend at least partially toward the first side. Each of the one or more or the plurality of suction holes 220 may form an air flow path for holding the insulating member 70.

Each suction hole 220 may include a first hole 222. Each suction hole 220 may include a second hole 224. The first hole 222 may have a first end formed in the first end surface S1. The first hole 222 may extend toward the first side.

A plurality of the first holes 222 may be formed spaced apart from each other in a circumferential direction around the main hole 212.

The second hole 224 may have a first end communicating with a second end of the first hole 222. The second hole 224 may have a second end communicating with the connecting hole 230. The second hole 224 may at least partially extend in a direction intersecting with an extending direction of the arm 200.

The one or more connecting holes 230 may be provided at the body 202 and/or the suction tip 204. The one or more connecting holes 230 may communicate with second ends of the one or more or the plurality of suction holes 220. The one or more connecting holes 230 may be connected to a decompression source.

The decompression source may provide a negative pressure to the one or more or the plurality of suction holes 220 and the one or more connecting holes 230.

### [METHOD OF INSERTING INSULATING MEMBER OF BATTERY CELL]

Referring to FIG. 7, a method S500 of inserting insulating member of battery cell according to an embodiment of the present invention may include an insertion process S510.

In the insertion process S510, the arm 200 may relatively move toward the second side while the insulating member 70 is held on the first end surface S1 to insert the insulating member 70 into the battery cell 50.

Here, when the insulating member 70 is inserted into the battery cell 50, the air inside the carrier 100 or battery cell 50 may be discharged to the outside through the through-hole 72 of the insulating member 70 and the exhaust hole 210 of the arm 200.

Accordingly, when the arm 200 moves relatively toward the second side and insert the insulating member 70 into the battery cell 50, the air inside the carrier 100 or the battery cell 50 may be easily discharged to the outside through the through-hole 72 of the insulating member 70 and the exhaust hole 210 of the arm 200 such that vortex may not be generated or may be reduced around the insulating member 70. As a result, even when the insulating member 70 is held on the arm 200 and inserted into the battery cell 50, the insulating member 70 may not move or rotate during insertion and may not be detached from the arm 200. Accordingly, the defect rate of the battery cell 50 may be reduced and the productivity and quality may be improved.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being comprised in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An apparatus for inserting insulating member of battery cell, the apparatus comprising:
a carrier 100 having an accommodating space open toward a first side where a battery cell 50 having an interior space open toward the first side is accommodated; and
an arm 200 disposed on the first side of the carrier 100 and having a first end surface S1 on a second side thereof opposite to the first side, an insulating member 70 being held on the first end surface S1, the arm 200 relatively moving toward the second side to insert the insulating member 70 into the battery cell 50,
wherein the insulating member 70 comprises a through-hole 72 formed through the insulating member 70, the through-hole 72 extending toward the first side and the second side, and
the arm 200 comprises an exhaust hole 210 formed therethrough, wherein the exhaust hole 210 has a first end formed in the first end surface S1 and communicating with the through-hole 72 toward the first side and the second side, and a second end formed in an outer surface of the arm 200 and formed on the first side of the first end surface S1.

2. The apparatus for inserting insulating member of battery cell of claim 1, wherein the exhaust hole 210 and the through-hole 72 face each other.

3. The apparatus for inserting insulating member of battery cell of claim 1 or 2, wherein the arm 200 comprises: one or more suction holes 220, each of the one or more suction holes 220 having a first end formed in the first end surface S1, extending at least partially toward the first side, and forming an air flow path for holding the insulating member 70; and one or more connecting holes 230 communicating with second ends of the one or more suction holes 220, and connected to a decompression source,
the decompression source provides a negative pressure to the one or more suction holes 220 and the one or more connecting holes 230, and
the exhaust hole 210 is formed spaced apart from the one or more suction holes 220 and the one or more connecting holes 230.

4. The apparatus for inserting insulating member of battery cell of claim 1 or 2, wherein the arm 200 has a side surface S2 extending toward the first side from an edge of the first end surface S1, and
the exhaust hole 210 comprises a main hole 212 and one or more extension holes 214,
the main hole 212 being recessed from an end of the arm 200 on the second side toward the first side and closed at the first side, and
each of the one or more extension holes 214 at least partially extending in a direction intersecting with an extending direction of the arm 200 and having a first end communicating with the main hole 212 and a second end formed in the side surface S2.

5. The apparatus for inserting insulating member of battery cell of claim 4, wherein the exhaust hole 210 comprises the main hole 212 and a plurality of the extension holes 214, the main hole 212 having a cross-sectional area larger than that of each of the plurality of extension holes 214.

6. The apparatus for inserting insulating member of battery cell of claim 4 or 5, wherein the exhaust hole 210 comprises the main hole 212 and a plurality of the extension holes 214, the plurality of extension holes 214 being radially formed around the main hole 212.

7. The apparatus for inserting insulating member of battery cell of claim 6, wherein the plurality of extension holes 214 are formed at equal angular intervals around the main hole 212 when projected on a virtual plane perpendicular to an extending direction of the arm 200.

8. The apparatus for inserting insulating member of battery cell of any one of claims 4 to 7, wherein the exhaust hole 210 comprises the main hole 212 and a plurality of the extension holes 214,
the arm 200 comprises: a plurality of suction holes 220, each of the plurality of suction holes 220 having a first end formed in the first end surface S1, extending at least partially toward the first side, and forming an air flow path for holding the insulating member 70; and one or more connecting holes 230 communicating with second ends of the plurality of suction holes 220, and connected to a decompression source,
the decompression source provides a negative pressure to the plurality of suction holes 220 and the one or more connecting holes 230, and
the main hole 212 and the plurality of extension holes 214 are formed spaced apart from the plurality of suction holes 220 and the one or more connecting holes 230.

9. The apparatus for inserting insulating member of battery cell of claim 8, wherein each of the plurality of suction holes 220 comprises a first hole 222 extending toward the first side and having a first end formed in the first end surface S1, a plurality of the first holes 222 being formed spaced apart from each other in a circumferential direction around the main hole 212, and
the plurality of extension holes 214 are radially formed around the main hole 212, each of the plurality of extension holes 214 being formed through a portion between a pair of adjacent first holes 222 in the circumferential direction.

10. The apparatus for inserting insulating member of battery cell of claim 9, wherein the plurality of extension holes 214 and the plurality of first holes 222 are alternately formed in the circumferential direction around the main hole 212 at equal angular intervals when projected on a virtual plane perpendicular to an extending direction of the arm 200.

11. The apparatus for inserting insulating member of battery cell of any one of claims 1 to 10, wherein the arm 200 comprises a body 202 and a suction tip 204 disposed at the second side of the body 202,
the first end surface S1 is an end surface of the suction tip 204 on the second side, and
the exhaust hole 210 is formed through the suction tip 204, has a first end formed in the first end surface S1, and has a second end formed in an outer surface of the suction tip 204,

12. A method S500 of inserting an insulating member of a battery cell using an apparatus for inserting an insulating member of a battery cell of any one of claims 1 to 11, the method comprising:
an inserting process S510 in which the arm 200 relatively moves toward the second side while the insulating member 70 is held on the first end surface S1 to insert the insulating member 70 into the battery cell 50,
wherein in the inserting process S510, when the insulating member 70 is inserted into the battery cell 50, air inside a carrier 100 or the battery cell 50 is discharged to outside through the through-hole 72 of the insulating member 70 and the exhaust hole 210 of the arm 200.
